# EUROPEAN PATENT APPLICATION

(11) **EP 4 651 274 A1**
(43) Date of publication of application: **19.11.2025**
(21) Application number: 24214502.7
(22) Date of filing: 21.11.2024
(51) Int. Cl.: H01M 50/124, H01M 50/14

(54) **METHOD FOR PREPARING A BATTERY CELL WITH A SURFACE CONTAINING AN INSULATING COATING, BATTERY CELL AND BATTERY PACK INCLUDING THE BATTERY CELL**

(30) Priority: 17.05.2024 CN 202410621916
(71) Applicant: Eve Power Co., Ltd., Jingmen, Hubei 448000 (CN)
(72) Inventor: SONG, Xiangling, Jingmen, Hubei, 448000 (CN); SUN, Fei, Jingmen, Hubei, 448000 (CN); GUO, Jiahao, Jingmen, Hubei, 448000 (CN); CHE, Liyuan, Jingmen, Hubei, 448000 (CN); YI, Yanhui, Jingmen, Hubei, 448000 (CN)
(74) Representative: Herrero & Asociados, S.L.

(57) **Abstract**

The present disclosure provides a battery cell with a surface containing an insulating coating, a method for preparing the same, and a battery pack including the same. The method for preparing the battery cell includes: S1. spraying an insulating paint onto a spraying surface of a battery cell to obtain a semi-finished product; S2. irradiating the semi-finished product under ultraviolet light with a power density of P1 for T1 seconds, followed by irradiating the semi-finished product under ultraviolet light with a power density of P2 for T2 seconds, to obtain the battery cell with the surface containing the insulating coating; wherein 0.1 W/cm²≤P1<2.5 W/cm², 0<T1≤2, 0.2 W/cm²≤P2≤3.5 W/cm², and 1≤T2≤8.

## Description

### TECHNICAL FIELD

The present disclosure relates to a field of lithium-ion battery technology, and in particular to a battery cell with a surface containing an insulating coating, a method for preparing the same, and a battery pack including the same.

### BACKGROUND

In recent years, with the growing popularity of new energy vehicles and their increasing consumer preference, the requirements for lithium batteries, often referred to as the "heart" of new energy vehicles, have significantly escalated. Enhancing the stability and safety of lithium batteries during operation has become the preferred research direction in the lithium battery industry. A battery cell is the smallest unit of the lithium batteries. Battery modules of new energy electric vehicles on the market consist of numerous battery cells, with hundreds or thousands of battery cells aggregated within a single battery pack. In order to ensure the safety of the battery cells, it is necessary to wrap sides and bottom of the battery cell with an insulating film in the production process to prevent a short circuit caused by the direct contact between the battery cell and an aluminum housing. Thus, the wrapping quality of the insulating film is of critical significance to the safety performance of the battery cell.

To ensure the insulating property, voltage endurance capability and appearance consistency of the battery cells, existing technologies primarily involve wrapping external protective films, such as PET films or PP films, around the exterior of the battery cells. However, during the process of wrapping external protective films around battery cells, issues such as air bubbles, wrinkles, and peeling often arise, leading to excessively high defect rates and serious material wastage. Moreover, during the assembly of battery cells into modules, the shear strength of the external protective films may be inadequate. These problems may result in a reduced yield of good-quality battery cells, increased costs, and even affect the overall performance of the battery cells, potentially triggering safety concerns.

### SUMMARY

In order to solve the deficiencies in the existing technology of utilizing an outer protective film to wrap an exterior of a battery cell, the present disclosure provides a battery cell with a surface containing an insulating coating, a method for preparing the same, and a battery pack including the same.

According to a first aspect of the present disclosure, a method for preparing a battery cell with a surface containing an insulating coating is provided. The method includes the following operations of S 1 and S2.

In the S1, spraying an insulating paint onto a spraying surface of a battery cell is conducted to obtain a semi-finished product.

In the S2, irradiating the semi-finished product under ultraviolet light with a power density of P1 for T1 seconds, followed by irradiating the semi-finished product under ultraviolet light with a power density of P2 for T2 seconds is conducted to obtain the battery cell with the surface containing the insulating coating.

In detail, 0.1 W/cm²≤P1≤2.5 W/cm², 0<T1≤2, 0.2 W/cm²≤P2≤3.5 W/cm², and 1≤T2≤8.

In the method for preparing the battery cell with the surface containing the insulating coating disclosed in the present disclosure, the insulating paint is sprayed on the spraying surface of the battery cell, subsequently, pre-curing is carried out through ultraviolet light irradiation with a low power density, followed by final curing using ultraviolet light irradiation with a high power density, such that the insulating paint is formed as the insulating coating on the spraying surface of the battery cell. In this way, the stress concentration due to the increase in a thickness of the insulating coating can be dispersed, and the risk of the insulating paint sagging during the spraying process can be reduced. Compared to directly wrapping an external protective film around the exterior of the battery cell, the insulating coating of the battery cell prepared by the method provided in the present disclosure exhibits a superior adhesion to the battery cell, which can not only effectively avoid issues that arise from the use of the external protective film, but also offer excellent protection for the battery cell, and improve the voltage endurance capability and insulating property of the battery cell. Moreover, when battery cells with the insulating coating prepared by the method are assembled into a battery module, a high shear strength (as high as more than 10 MPa) is achieved after the battery cells are bonded with a structural adhesive, thereby ensuring a robust structural stability of the battery module. In addition, regarding the method for preparing the battery cell with the insulating coating provided in the present disclosure, during the spraying process using the insulating paint, the material utilization rate of the insulating paint can reach over 95%, with a simple process and high first-pass yield, effectively reducing production costs. Moreover, a thickness of the insulating coating can be determined according to an actual demand, and a high precision control can be realized in both thickness and planar direction (a thickness tolerance of the insulating coating is±10 µm). In addition, the spraying process can be performed on the surface of a finished battery cell or a raw material of a housing of the battery cell, and a window opening can be made at a specific position if necessary. However, if the insulating paint is sprayed on the spraying surface of the battery cell without being pre-cured, stress concentration will occur inside the insulating coating as the thickness of the coating increases, leading to cracking issues in the insulating coating.

In an embodiment, in the S2, 1.4 W/cm²≤P1≤1.7 W/cm², 0<T1≤1, 1.5 W/cm²≤P2≤2.2 W/cm², and 2≤T2≤5.

In an embodiment, in the S1, before the spraying, the method further includes: pretreating the spraying surface of the battery cell. After the pretreating of the spraying surface of the battery cell, a surface roughness of the spraying surface satisfies: 0.5 µm≤Ra≤2.5 µm, 3 µm≤Kz≤15 µm, and a dyne level of the spraying surface is ≥60.

In an embodiment, 1.0 µm≤Ra≤2.0 µm, and 6 µm≤Kz≤10 µm.

In an embodiment, in the S1, the spraying is implemented by means of a UV spraying process or a UV printing process.

In an embodiment, the UV spraying process is carried out by a spray gun, the UV printing process is carried out by 3D printing or a printer.

In an embodiment, in the S1, the spraying of the battery cell is carried out in a following manner: directly spraying or printing onto planes of the battery cell, with edges and corners of the battery cell repeatedly covered, or spraying or printing along the edges of the battery cell first, followed by spraying or printing onto the planes of the battery cell.

Spraying or printing on the battery cell by the aforementioned method ensures the thickness of the coating on the edges of the battery cell and protective effect to the edges of the battery cell. Moreover, spraying or printing technology offers a high precision control, allowing a precise control in the designed non-coating areas (i.e., areas without being sprayed or printed) without being sprayed or printed, with a precision control less than 0.5 mm.

In an embodiment, in the S1, the battery cell is sprayed or printed multiple times or once.

The aforementioned spraying method ensures consistency of coating performance and coating thickness. Moreover, coatings of different thicknesses or different materials sprayed on different surfaces of the battery cell can provide varying protective effects, and thicker coatings result in better voltage endurance capability and insulating property of the battery cell.

In an embodiment, a thermal conductivity of the insulating coating is 0.15 W/(m·K)-3 W/(m·K).

In an embodiment, the pretreating includes at least one of laser cleaning and plasma treatment.

The spraying surface of the battery cell is pretreated before the spraying onto the spraying surface, so as to control the surface roughness Ra, Rz and the dyne level within a suitable range. In this way, an adhesion between the spraying surface of the battery cell and the insulating coating can be enhanced, allowing the insulating coating to be better bonded with the spraying surface of the battery cell, further improving the voltage endurance capability and insulating property of the battery cell with the insulating coating.

In an embodiment, in the S1, an area of the spraying surface is defined as S, and a spraying amount of the insulating paint is defined as M, and the S and the M satisfy: 10 µm≤M/S≤500 µm.

In an embodiment, 60 µm≤M/S≤150 µm.

In an embodiment, in the S1, the insulating paint includes, by weight, 70-98 parts of acrylic resin, 5-20 parts of a first active monomer, 5-20 parts of a second active monomer, 2-10 parts of a first photoinitiator, and 2-10 parts of a second photoinitiator.

In an embodiment, in the S1, the insulating paint includes, by weight, 70-98 parts of acrylic resin, 5-20 parts of a first active monomer, 5-20 parts of a second active monomer, 1-10 parts of a first photoinitiator, and 1-10 parts of a second photoinitiator.

In an embodiment, the first active monomer is methacrylic acid, and the second active monomer is acrylic acid.

In an embodiment, the first photoinitiator is benzotriazole methyl ester photoinitiator, and the second photoinitiator is stilbene photoinitiator.

In an embodiment, the aforementioned insulating paint further includes, by weight, 0.1-30 parts of an auxiliary, and 1-15 parts of a color paste for acrylic resin.

In an embodiment, the auxiliary includes at least one of a dispersant, a defoamer, and a leveling agent.

According to a second aspect of the present disclosure, a battery cell with a surface containing an insulating coating is provided. The battery cell is prepared by the aforementioned method for preparing the battery cell with the insulating coating.

The battery cell with surface containing the insulating coating prepared by the method provided in the present disclosure has good voltage endurance capability and insulating property.

According to a third aspect of the present disclosure, a battery pack is provided. The battery pack includes the battery cell with the surface containing the insulating coating as described above.

### DETAILED DESCRIPTION

The technical features in the technical solution provided in the present disclosure are further clearly and completely described in the following in connection with specific examples. Obviously, the described examples are only a part of the examples of the present disclosure and not all of the examples. Any other examples obtained by those skilled in the art without inventive work, based on the examples described herein, fall within the scope of protection of the present disclosure.

### Example 1

A battery cell with a surface containing an insulating coating was prepared by a following method including operations of S 1 and S2.

In the S1, an insulating paint was sprayed onto a spraying surface of a battery cell to obtain a semi-finished product.

The battery cell was model LF280K from EVE Energy Co., Ltd. in Huizhou.

An area of the spraying surface was defined as S, and a spraying amount of the insulating paint was defined as M, and M/S=100 µm.

The insulating paint was prepared by the following operations: 80 parts of acrylic resin, 10 parts of a first active monomer, 10 parts of a second active monomer, 8 parts of a first photoinitiator, 8 parts of a second photoinitiator, 2 parts of an auxiliary, and 10 parts of a color paste for acrylic resin were mixed by weight and stirred evenly to produce the insulating paint.

The first active monomer was methacrylic acid, and the second active monomer was acrylic acid.

The first photoinitiator was benzotriazole methyl ester photoinitiator, and the second photoinitiator was stilbene photoinitiator.

The auxiliary was prepared by mixing a dispersant, a defoamer, and a levelling agent in a mass ratio of 1:1:1.

In the S2, the semi-finished product was irradiated under ultraviolet light with a power density of 1.5 W/cm² for 1 s, and subsequently, irradiated under ultraviolet light with a power density of 2.2 W/cm² for 5 s, to obtain the battery cell with the surface containing the insulating coating.

### Example 2

A battery cell with a surface containing an insulating coating was prepared by a following method including operations of S1 and S2.

In the S1, an insulating paint was sprayed onto a spraying surface of a battery cell to obtain a semi-finished product.

The battery cell was model LF280K from EVE Energy Co., Ltd. in Huizhou.

An area of the spraying surface was defined as S, and a spraying amount of the insulating paint was defined as M, and M/S=10 µm.

The insulating paint was prepared by the following operations: 70 parts of acrylic resin, 5 parts of a first active monomer, 5 parts of a second active monomer, 2 parts of a first photoinitiator, 2 parts of a second photoinitiator, 0.1 parts of an auxiliary, and 1 part of a color paste for acrylic resin were mixed by weight and stirred evenly to produce the insulating paint.

The first active monomer was methacrylic acid, and the second active monomer was acrylic acid.

The first photoinitiator was benzotriazole methyl ester photoinitiator, and the second photoinitiator was stilbene photoinitiator.

The auxiliary was prepared by mixing a dispersant, a defoamer, and a levelling agent in a mass ratio of 1:1:1.

In the S2, the semi-finished product was irradiated under ultraviolet light with a power density of 0.1 W/cm² for 2 s, and subsequently, irradiated under ultraviolet light with a power density of 0.2 W/cm² for 8 s, to obtain the battery cell with the surface containing the insulating coating.

### Example 3

A battery cell with a surface containing an insulating coating was prepared by a following method including operations of S1 and S2.

In the S1, an insulating paint was sprayed onto a spraying surface of a battery cell to obtain a semi-finished product.

The battery cell was model LF280K from EVE Energy Co., Ltd. in Huizhou.

An area of the spraying surface was defined as S, and a spraying amount of the insulating paint was defined as M, and M/S=500 µm.

The insulating paint was prepared by the following operations: 98 parts of acrylic resin, 20 parts of a first active monomer, 20 parts of a second active monomer, 10 parts of a first photoinitiator, 10 parts of a second photoinitiator, 30 parts of an auxiliary, and 15 parts of a color paste for acrylic resin were mixed by weight and stirred evenly to produce the insulating paint.

The first active monomer was methacrylic acid, and the second active monomer was acrylic acid.

The first photoinitiator was benzotriazole methyl ester photoinitiator, and the second photoinitiator was stilbene photoinitiator.

The auxiliary was prepared by mixing a dispersant, a defoamer, and a levelling agent in a mass ratio of 1:1:1.

In the S2, the semi-finished product was irradiated under ultraviolet light with a power density of 2.5 W/cm² for 0.1 s, and subsequently, irradiated under ultraviolet light with a power density of 3.5 W/cm² for 1 s, to obtain the battery cell with the surface containing the insulating coating.

### Example 4

A battery cell with a surface containing an insulating coating was prepared in the present example. Compared to Example 1, the differences lay specifically in the S2, detailed as follows.

In the S2, the semi-finished product was irradiated under ultraviolet light with a power density of 1.4 W/cm² for 0.8 s, and subsequently, irradiated under ultraviolet light with a power density of 1.5 W/cm² for 4 s, to obtain the battery cell with the surface containing the insulating coating.

Apart from the aforementioned differences, all other materials, formulation ratios, and preparation operations in this example were strictly consistent with those in Example 1.

### Example 5

A battery cell with a surface containing an insulating coating was prepared in the present example. Compared to Example 1, the differences lay specifically in the S2, detailed as follows.

In the S2, the semi-finished product was irradiated under ultraviolet light with a power density of 1.7 W/cm² for 0.1 s, and subsequently, irradiated under ultraviolet light with a power density of 2.0 W/cm² for 2 s, to obtain the battery cell with the surface containing the insulating coating.

Apart from the aforementioned differences, all other materials, formulation ratios, and preparation operations in this example were strictly consistent with those in Example 1.

### Example 6

A battery cell with a surface containing an insulating coating was prepared in the present example. Compared to Example 1, the differences lay specifically in the S1, detailed as follows.

In the S1, a spraying surface of a battery cell was pretreated by laser cleaning, such that a roughness of the spraying surface satisfied Ra=0.5 µm, Rz=3 µm, and a dyne level of the spraying surface was ≥60. Subsequently, an insulating paint was sprayed on the spraying surface of the battery cell to obtain a semi-finished product.

Apart from the aforementioned differences, all other materials, formulation ratios, and preparation operations in this example were strictly consistent with those in Example 1.

### Example 7

A battery cell with a surface containing an insulating coating was prepared in the present example. Compared to Example 1, the differences lay specifically in the S1, detailed as follows.

In the S1, a spraying surface of a battery cell was pretreated by laser cleaning, such that a roughness of the spraying surface satisfied Ra=1.5 µm, Rz=6 µm, and a dyne level of the spraying surface was ≥60. Subsequently, an insulating paint was sprayed on the spraying surface of the battery cell to obtain a semi-finished product.

Apart from the aforementioned differences, all other materials, formulation ratios, and preparation operations in this example were strictly consistent with those in Example 1.

### Example 8

A battery cell with a surface containing an insulating coating was prepared in the present example. Compared to Example 1, the differences lay specifically in the S1, detailed as follows.

In the S1, a spraying surface of a battery cell was pretreated by laser cleaning, such that a roughness of the spraying surface satisfied Ra=2.5 µm, Rz=15 µm, and a dyne level of the spraying surface was ≥60. Subsequently, an insulating paint was sprayed on the spraying surface of the battery cell to obtain a semi-finished product.

Apart from the aforementioned differences, all other materials, formulation ratios, and preparation operations in this example were strictly consistent with those in Example 1.

### Example 9

A battery cell with a surface containing an insulating coating was prepared in the present example. Compared to Example 6, the differences lay specifically in: in the S1, a spraying surface of a battery cell was pretreated by plasma treatment instead of laser cleaning. Apart from the aforementioned differences, all other materials, formulation ratios, and preparation operations in this example were strictly consistent with those in Example 6.

### Example 10

A battery cell with a surface containing an insulating coating was prepared in the present example. Compared to Example 6, the differences lay specifically in the S1, detailed as follows.

In the S1, a spraying surface of a battery cell was pretreated by laser cleaning, such that a roughness of the spraying surface satisfied Ra=0.7 µm, Rz=8 µm, and a dyne level of the spraying surface was ≥60. Subsequently, an insulating paint was sprayed on the spraying surface of the battery cell to obtain a semi-finished product.

Apart from the aforementioned differences, all other materials, formulation ratios, and preparation operations in this example were strictly consistent with those in Example 6.

### Example 11

A battery cell with a surface containing an insulating coating was prepared in the present example. Compared to Example 6, the differences lay specifically in the S1, detailed as follows.

In the S1, a spraying surface of a battery cell was pretreated by laser cleaning, such that a roughness of the spraying surface satisfied Ra=2.5 µm, Rz=8 µm, and a dyne level of the spraying surface was ≥60. Subsequently, an insulating paint was sprayed on the spraying surface of the battery cell to obtain a semi-finished product.

Apart from the aforementioned differences, all other materials, formulation ratios, and preparation operations in this example were strictly consistent with those in Example 6.

### Example 12

A battery cell with a surface containing an insulating coating was prepared in the present example. Compared to Example 6, the differences lay specifically in the S1, detailed as follows.

In the S1, a spraying surface of a battery cell was pretreated by laser cleaning, such that a roughness of the spraying surface satisfied Ra=1 µm, Rz=3 µm, and a dyne level of the spraying surface was ≥60. Subsequently, an insulating paint was sprayed on the spraying surface of the battery cell to obtain a semi-finished product.

Apart from the aforementioned differences, all other materials, formulation ratios, and preparation operations in this example were strictly consistent with those in Example 6.

### Example 13

A battery cell with a surface containing an insulating coating was prepared in the present example. Compared to Example 6, the differences lay specifically in the S1, detailed as follows.

In the S1, a spraying surface of a battery cell was pretreated by laser cleaning, such that a roughness of the spraying surface satisfied Ra=1 µm, Rz=15 µm, and a dyne level of the spraying surface was ≥60. Subsequently, an insulating paint was sprayed on the spraying surface of the battery cell to obtain a semi-finished product.

Apart from the aforementioned differences, all other materials, formulation ratios, and preparation operations in this example were strictly consistent with those in Example 6.

### Example 14

A battery cell with a surface containing an insulating coating was prepared in the present example. Compared to Example 6, the differences lay specifically in the S1, detailed as follows.

In the S1, a spraying surface of a battery cell was pretreated by laser cleaning, such that a roughness of the spraying surface satisfied Ra=1 µm, Rz=10 µm, and a dyne level of the spraying surface was <60. Subsequently, an insulating paint was sprayed on the spraying surface of the battery cell to obtain a semi-finished product.

Apart from the aforementioned differences, all other materials, formulation ratios, and preparation operations in this example were strictly consistent with those in Example 6.

### Example 15

A battery cell with a surface containing an insulating coating was prepared in the present example. Compared to Example 6, the differences lay specifically in the S1, detailed as follows.

In the S1, a spraying surface of a battery cell was pretreated by laser cleaning, such that a roughness of the spraying surface satisfied Ra=3 µm, Rz=20 µm, and a dyne level of the spraying surface was <60. Subsequently, an insulating paint was sprayed on the spraying surface of the battery cell to obtain a semi-finished product.

Apart from the aforementioned differences, all other materials, formulation ratios, and preparation operations in this example were strictly consistent with those in Example 6.

### Example 16

A battery cell with a surface containing an insulating coating was prepared in the present example. Compared to Example 1, the differences lay specifically in: in the S1, M/S=60 µm. Apart from the aforementioned differences, all other materials, formulation ratios, and preparation operations in this example were strictly consistent with those in Example 1.

### Example 17

A battery cell with a surface containing an insulating coating was prepared in the present example. Compared to Example 1, the differences lay specifically in: in the S1, M/S=150 µm. Apart from the aforementioned differences, all other materials, formulation ratios, and preparation operations in this example were strictly consistent with those in Example 1.

### Example 18

A battery cell with a surface containing an insulating coating was prepared in the present example. Compared to Example 1, the differences lay specifically in: in the S1, M/S=7 µm. Apart from the aforementioned differences, all other materials, formulation ratios, and preparation operations in this example were strictly consistent with those in Example 1.

### Example 19

A battery cell with a surface containing an insulating coating was prepared in the present example. Compared to Example 1, the differences lay specifically in: in the S1, M/S=520 µm. Apart from the aforementioned differences, all other materials, formulation ratios, and preparation operations in this example were strictly consistent with those in Example 1.

### Comparative Example 1

A battery cell with an outer protective film was provided in the present comparative example, and was prepared by the following operations. After pretreating a surface of a battery cell by means of steam, the battery cell (model LF280K from EVE Energy Co., Ltd. in Huizhou) was wrapped by an outer protective film (PET film) and an insulating sheet to form an insulating protection on the surface of the battery cell, to obtain the battery cell with the outer protective film.

### Comparative Example 2

A battery cell with a surface containing an insulating coating was prepared in the present example. Compared to Example 1, the differences lay specifically in the S2, detailed as follows.

In the S2, the semi-finished product was irradiated under ultraviolet light with a power density of 3.5 W/cm² for 6 s, to obtain the battery cell with the surface containing the insulating coating.

Apart from the aforementioned differences, all other materials, formulation ratios, and preparation operations in this example were strictly consistent with those in Example 1.

### Comparative Example 3

A battery cell with a surface containing an insulating coating was prepared in the present example. Compared to Example 1, the differences lay specifically in the S2, detailed as follows.

In the S2, the semi-finished product was irradiated under ultraviolet light with a power density of 0.05 W/cm² for 2 s, and subsequently, irradiated under ultraviolet light with a power density of 2.5 W/cm² for 5 s, thus to obtain the battery cell with the surface containing the insulating coating.

Apart from the aforementioned differences, all other materials, formulation ratios, and preparation operations in this example were strictly consistent with those in Example 1.

### Comparative Example 4

A battery cell with a surface containing an insulating coating was prepared in the present example. Compared to Example 1, the differences lay specifically in the S2, detailed as follows.

In the S2, the semi-finished product was irradiated under ultraviolet light with a power density of 2.7 W/cm² for 1 s, and subsequently, irradiated under ultraviolet light with a power density of 3.5 W/cm² for 1 s, thus to obtain the battery cell with the surface containing the insulating coating.

Apart from the aforementioned differences, all other materials, formulation ratios, and preparation operations in this example were strictly consistent with those in Example 1.

### Comparative Example 5

A battery cell with a surface containing an insulating coating was prepared in the present example. Compared to Example 1, the differences lay specifically in the S2, detailed as follows.

In the S2, the semi-finished product was irradiated under ultraviolet light with a power density of 0.1 W/cm² for 2 s, and subsequently, irradiated under ultraviolet light with a power density of 0.15 W/cm² for 8 s, thus to obtain the battery cell with the surface containing the insulating coating.

Apart from the aforementioned differences, all other materials, formulation ratios, and preparation operations in this example were strictly consistent with those in Example 1.

### Comparative Example 6

A battery cell with a surface containing an insulating coating was prepared in the present example. Compared to Example 1, the differences lay specifically in the S2, detailed as follows.

In the S2, the semi-finished product was irradiated under ultraviolet light with a power density of 1.5 W/cm² for 1 s, and subsequently, irradiated under ultraviolet light with a power density of 3.7 W/cm² for 1 s, thus to obtain the battery cell with the surface containing the insulating coating.

Apart from the aforementioned differences, all other materials, formulation ratios, and preparation operations in this example were strictly consistent with those in Example 1.

### Test Example

### 1. Test Objects

The test objects were the battery cells with a surface containing an insulating coating prepared in Examples 1-19 and Comparative Examples 1-6, which are tested for relevant performance.

### 2. Test Contents

### 1) Voltage Endurance Capability

a) A conductive battery cell-shaped fixture was utilized to cover the coating of the battery cell with the surface containing the insulating coating entirely.
b) Parameters of a voltage endurance tester were set, specifically, with a test voltage of the voltage endurance test set to DC6000V and a test time of the voltage endurance test set to 60 s.
c) A ground terminal was connected to a housing of the battery cell, and a high-voltage end of a test probe was in contact with the conductive battery cell-shaped fixture. Subsequently, the equipment was started, reading and recording a current value (in units of mA).

Specifically, a final current value within a range of 0.001 mA-0.02 mA indicates that the battery cell with the insulating coating passes the voltage endurance capability test and has excellent voltage endurance capability (no leakage), while a current value greater than 0.1 mA indicates that the battery cell with the insulating coating fails the voltage endurance capability test and may experience leakage.

### 2) Insulating Property

a) A conductive fixture was utilized to cover the coating of the battery cell with the surface containing the insulating coating entirely.
b) A Hi-pot was set, specifically, with a test voltage set to 1500 V and a test time set to 60 s.
c) A ground end was clamp onto a sample, and a high-voltage end of a test probe was in contact with a surface of a conductive cotton. Subsequently, the equipment was started, reading and recording a resistance value (in units of MS2).

Specifically, a final resistance value equal to or greater than 500 MΩ indicates that the battery cell with the insulating coating passes the insulating property test and has excellent insulating property, while a resistance value less than 500 MΩ indicates that the battery cell with the insulating coating fails the insulating property test.

### 3) Shear Strength

This test was conducted referring to GB/T 7124-2008.

A final shear strength equal to or greater than 10 MPa indicates that the battery cell with the insulating coating passes the shear strength test and has excellent shear behavior, while a shear strength less than 10 MPa indicates that the battery cell with the insulating coating fails the shear strength test.

### 4) Electrolyte Resistance Performance

The battery cell with the surface containing the insulating coating was firstly soaked in an electrolyte at room temperature for 24 h. Subsequently, after the battery cell was dried, the voltage endurance capability, insulating property, and shear strength tests were carried out on the battery cell after drying referring to the test methods as described above. Particularly, the electrolyte used in this test example was prepared as follows: Ethylene carbonate (EC), dimethyl carbonate (DMC), and ethyl methyl carbonate (EMC) were mixed in a volume ratio of 1:1:1 to obtain an organic solvent. Subsequently, a thoroughly dried lithium salt, LiPF6, was dissolved in the organic solvent to produce an electrolyte with a concentration of 1 M.

### 5) High and Low-Temperature Cycle Resistance Performance

A high and low-temperature cycle treatment was conducted referring to GB/T 36276 on the battery cell firstly. Subsequently, the voltage endurance capability, insulating property, and shear strength tests were carried out on the battery cell according to the test methods as described above.

### 6) High-Temperature and Humidity Resistance Performance

A high-temperature and humidity treatment was conducted referring to GB/T 2423.2 on the battery cell firstly. Subsequently, after the battery cell was dried, the voltage endurance capability, insulating property, and shear strength tests were carried out on the battery cell according to the test methods as described above.

### 7) Salt Spray Resistance Property

The battery cell was treated referring to GB/T 31467.3-2015 and GB/T 36276 firstly. Subsequently, the voltage endurance capability, insulating property, and shear strength tests were carried out on the battery cell according to the test methods as described above.

Regarding the test results of the four performances including the electrolyte resistance, high and low-temperature cycle resistance, high-temperature and humidity resistance, and salt spray resistance, a) A final current value within a range of 0.001 mA-0.02 mA indicates that the battery cell with the insulating coating passes the voltage endurance capability test and exhibits excellent voltage endurance capability (no leakage), while a current value greater than 0.1 mA indicates that the battery cell with the insulating coating fails the voltage endurance capability test and may experience leakage. b) A final resistance value equal to or greater than 500 MΩ indicates that the battery cell with the insulating coating passes the insulating property test and exhibits excellent insulating property, while a resistance value less than 500 MΩ indicates that the battery cell with the insulating coating fails the insulating property test. c) A final shear strength equal to or greater than 4 MPa indicates that the battery cell with the insulating coating passes the shear strength test and has excellent shear behavior, while a shear strength less than 4 MPa indicates that the battery cell with the insulating coating fails the shear strength test.

### 3. Test Results

Test results of the safety performance of the battery cells with the surface containing the insulating layer are detailed in Table 1 below.

**Table 1**

| group | voltage endurance capability (mA) | insulating property (MΩ) | shear strength (MPa) |
|---|---|---|---|
| Ex. 1 | 0.014 | 589 | 17 |
| Ex. 2 | 0.018 | 561 | 14 |
| Ex. 3 | 0.017 | 573 | 13 |
| Ex. 4 | 0.013 | 594 | 15 |
| Ex. 5 | 0.014 | 596 | 16 |
| Ex. 6 | 0.008 | 605 | 18 |
| Ex. 7 | 0.005 | 618 | 19 |
| Ex. 8 | 0.007 | 610 | 19 |
| Ex. 9 | 0.009 | 602 | 18 |
| Ex. 10 | 0.011 | 600 | 17 |
| Ex. 11 | 0.010 | 599 | 19 |
| Ex. 12 | 0.010 | 601 | 17 |
| Ex. 13 | 0.011 | 602 | 18 |
| Ex. 14 | 0.010 | 601 | 18 |
| Ex. 15 | 0.013 | 597 | 17 |
| Ex. 16 | 0.013 | 592 | 17 |
| Ex. 17 | 0.012 | 593 | 18 |
| Ex. 18 | 0.019 | 540 | 11 |
| Ex. 19 | 0.020 | 551 | 16 |
| Comp. Ex. 1 | 0.016 | 562 | 2 |
| Comp. Ex. 2 | 0.141 | 463 | 5 |
| Comp. Ex. 3 | 0.116 | 480 | 7 |
| Comp. Ex. 4 | 0.107 | 495 | 9 |
| Comp. Ex. 5 | 0.123 | 489 | 8 |
| Comp. Ex. 6 | 0.112 | 496 | 4 |

Test results of the safety performance of the battery cells with the surface containing the insulating coating produced in Examples 1-19 and Comparative Examples 1-6, are shown in Table 1.

From the test results of the safety performance shown in Table 1, the following conclusions can be drawn.

In Comparative Example 1, the battery cell was wrapped with the external protective film, whereas in Embodiment 1, the insulating coating was formed on the surface of the battery cell by spraying the insulating paint on the surface. Test results demonstrate that, although the voltage endurance capability and insulating property of the battery cell wrapped with the external protective film in Comparative Example 1 were comparable to those of Example 1, the shear strength of the battery cell in Comparative Example 1 was notably inferior to that of Embodiment 1.

In comparison with the battery cells with the surface containing the insulating coating obtained in Comparative Examples 2-6, in Examples 1-19, during the process of preparing the battery cells with the surface containing the insulating coating, after the spraying the insulating paint onto the surface of the battery cell, the semi-finished product was irradiated under ultraviolet light with a low power density P1 for T1 seconds, and then irradiated under ultraviolet light with a power density P2 for T2 seconds, where 0.1 W/cm²≤P1≤2.5 W/cm², 0<T1≤2, 0.2 W/cm²≤P2≤3.5 W/cm², and 1≤T2≤8. The test results show that, the voltage endurance capability, insulating property, and shear behavior of the battery cell with the surface containing the insulating layer, as obtained in Examples 1-19, were superior to those of Comparative Examples 2-6.

The reasons for the aforementioned results were the insufficiency of the shear strength of the outer protective film used to wrap the battery cell, making it difficult to pass the shear strength test. In the present disclosure, however, the insulating paint was first sprayed on the spraying surface of the battery cell, subsequently pre-cured by ultraviolet light irradiation with a low power density, and then finally cured by ultraviolet light irradiation with a high power density. This process enables the insulating paint to form the insulating coating on the spraying surface of the battery cell, effectively dispersing the stress concentration caused by the increase in the thickness of the insulating coating and reducing the risk of the insulating paint sagging during the spraying process. Moreover, the insulating coating exhibits a good adhesion to the battery cell, effectively avoiding the adverse effects associated with the use of the outer protective film while providing excellent protection for the battery cell. In addition, the voltage endurance capability and insulating property of the battery cell can be enhanced. Furthermore, when the battery cells with the insulating coating are assembled into a battery module, a high shear strength (as high as more than 10 MPa) is achieved after the battery cells are bonded with a structural adhesive, thereby ensuring a robust structural stability of the battery module.

Compared to Example 1, in Examples 6-15, the coating surface of the battery cell was pretreated by laser cleaning or plasma treatment, subsequently the insulating paint was sprayed on the pretreated spraying surface to produce the battery cell with the surface containing the insulating layer. Test results showed that, overall, the voltage endurance capability, insulating property, and shear behavior of the battery cells with the surface containing the insulating layer, as obtained in Examples 6-15, were superior to those of Example 1.

In Example 6, during the pretreating process of the spraying surface of the battery cell by laser cleaning or plasma treatment, by controlling the parameters of the pretreatment, the surface roughness of the spraying surface of the battery cell satisfied the conditions: 0.5 µm ≤ Ra ≤ 2.5 µm, 3 µm ≤ Rz ≤ 15 µm, and the dyne level is ≥60. Compared to Example 6, in Examples 10-15, after the pretreatment of the spraying surface of the battery cell by laser cleaning or plasma treatment, the surface roughness and dyne level of the spraying surface did not meet the aforementioned ranges. Test results showed that, overall, the voltage endurance capability, insulating property, and shear behavior of the battery cells with the surface containing the insulating layer, as obtained in Examples 6-15, were slightly inferior to those of Example 1.

Compared to Example 1, during the process of forming the insulating coating on the spraying surface in Examples 18-19, an area S of the spraying surface and a spraying amount M of the insulating paint did not satisfy the relationship 10 µm ≤ M/S ≤ 500 µm. Test results show that, the voltage endurance capability, insulating property, and shear behavior of the battery cells with the surface containing the insulating coating produced in Examples 18-19 were all inferior to those of Example 1.

Test results of the electrolyte resistance performance are shown in Table 2, test results of the high and low-temperature cycle resistance performance in Table 3, test results of the high-temperature and humidity resistance performance in Table 4, and test results of the salt spray resistance property in Table 5.

**Table 2**

| group | voltage endurance capability | insulating property | shear strength |
|---|---|---|---|
| Ex. 1 | OK | OK | OK |
| Ex. 2 | OK | OK | OK |
| Ex. 3 | OK | OK | OK |
| Ex. 4 | OK | OK | OK |
| Ex. 5 | OK | OK | OK |
| Ex. 6 | OK | OK | OK |
| Ex. 7 | OK | OK | OK |
| Ex. 8 | OK | OK | OK |
| Ex. 9 | OK | OK | OK |
| Ex. 10 | OK | OK | OK |
| Ex. 11 | OK | OK | OK |
| Ex. 12 | OK | OK | NG |
| Ex. 13 | OK | OK | OK |
| Ex. 14 | OK | OK | OK |
| Ex. 15 | OK | OK | OK |
| Ex. 16 | OK | OK | OK |
| Ex. 17 | OK | OK | OK |
| Ex. 18 | NG | NG | NG |
| Ex. 19 | OK | OK | NG |
| Comp. Ex. 1 | OK | OK | NG |
| Comp. Ex. 2 | OK | OK | NG |
| Comp. Ex. 3 | OK | OK | NG |
| Comp. Ex. 4 | OK | OK | OK |
| Comp. Ex. 5 | NG | NG | NG |
| Comp. Ex. 6 | OK | OK | NG |

**Table 3**

| group | voltage endurance capability | insulating property | shear strength |
|---|---|---|---|
| Ex. 1 | OK | OK | OK |
| Ex. 2 | OK | OK | OK |
| Ex. 3 | OK | OK | OK |
| Ex. 4 | OK | OK | OK |
| Ex. 5 | OK | OK | OK |
| Ex. 6 | OK | OK | OK |
| Ex. 7 | OK | OK | OK |
| Ex. 8 | OK | OK | OK |
| Ex. 9 | OK | OK | OK |
| Ex. 10 | OK | OK | OK |
| Ex. 11 | OK | OK | OK |
| Ex. 12 | OK | OK | NG |
| Ex. 13 | OK | OK | OK |
| Ex. 14 | OK | OK | OK |
| Ex. 15 | OK | OK | OK |
| Ex. 16 | OK | OK | OK |
| Ex. 17 | OK | OK | OK |
| Ex. 18 | NG | NG | NG |
| Ex. 19 | OK | OK | NG |
| Comp. Ex. 1 | OK | OK | NG |
| Comp. Ex. 2 | OK | OK | NG |
| Comp. Ex. 3 | OK | OK | NG |
| Comp. Ex. 4 | OK | OK | NG |
| Comp. Ex. 5 | NG | NG | NG |
| Comp. Ex. 6 | OK | OK | NG |

**Table 4**

| group | voltage endurance capability | insulating property | shear strength |
|---|---|---|---|
| Ex. 1 | OK | OK | OK |
| Ex. 2 | OK | OK | OK |
| Ex. 3 | OK | OK | OK |
| Ex. 4 | OK | OK | OK |
| Ex. 5 | OK | OK | OK |
| Ex. 6 | OK | OK | OK |
| Ex. 7 | OK | OK | OK |
| Ex. 8 | OK | OK | OK |
| Ex. 9 | OK | OK | OK |
| Ex. 10 | OK | OK | OK |
| Ex. 11 | OK | OK | OK |
| Ex. 12 | OK | OK | NG |
| Ex. 13 | OK | OK | OK |
| Ex. 14 | OK | OK | OK |
| Ex. 15 | OK | OK | OK |
| Ex. 16 | OK | OK | OK |
| Ex. 17 | OK | OK | OK |
| Ex. 18 | NG | NG | NG |
| Ex. 19 | OK | OK | NG |
| Comp. Ex. 1 | OK | OK | NG |
| Comp. Ex. 2 | OK | OK | NG |
| Comp. Ex. 3 | OK | OK | NG |
| Comp. Ex. 4 | OK | OK | NG |
| Comp. Ex. 5 | NG | NG | NG |
| Comp. Ex. 6 | OK | OK | NG |

**Table 5**

| group | voltage endurance capability | insulating property | shear strength |
|---|---|---|---|
| Ex. 1 | OK | OK | OK |
| Ex. 2 | OK | OK | OK |
| Ex. 3 | OK | OK | OK |
| Ex. 4 | OK | OK | OK |
| Ex. 5 | OK | OK | OK |
| Ex. 6 | OK | OK | OK |
| Ex. 7 | OK | OK | OK |
| Ex. 8 | OK | OK | OK |
| Ex. 9 | OK | OK | OK |
| Ex. 10 | OK | OK | OK |
| Ex. 11 | OK | OK | OK |
| Ex. 12 | OK | OK | NG |
| Ex. 13 | OK | OK | OK |
| Ex. 14 | OK | OK | OK |
| Ex. 15 | OK | OK | OK |
| Ex. 16 | OK | OK | OK |
| Ex. 17 | OK | OK | OK |
| Ex. 18 | NG | NG | NG |
| Ex. 19 | OK | OK | NG |
| Comp. Ex. 1 | OK | OK | NG |
| Comp. Ex. 2 | OK | OK | NG |
| Comp. Ex. 3 | OK | OK | NG |
| Comp. Ex. 4 | OK | OK | NG |
| Comp. Ex. 5 | NG | NG | NG |
| Comp. Ex. 6 | OK | OK | NG |

The above embodiments are only used to illustrate the technical solution of the present disclosure rather than to limit the scope of protection of the present disclosure. Although the present disclosure is described in detail with reference to the above embodiments, a person of ordinary skill in the art should understand that the technical solution of the present disclosure may be modified or replaced by equivalent ones, but these modifications or replacements are within the scope of protection of the present disclosure.

## Claims

1. A method for preparing a battery cell with a surface containing an insulating coating, **characterized in that** the method comprises:
S1. spraying an insulating paint onto a spraying surface of a battery cell to obtain a semi-finished product;
S2. irradiating the semi-finished product under ultraviolet light with a power density of P1 for T1 seconds, followed by irradiating the semi-finished product under ultraviolet light with a power density of P2 for T2 seconds, to obtain the battery cell with the surface containing the insulating coating;
wherein 0.1 W/cm²≤P1≤2.5 W/cm², 0<T1<2, 0.2 W/cm²≤P2≤3.5 W/cm², and 1≤T2≤8.

2. The method for preparing the battery cell with the surface containing the insulating coating as claimed in claim 1, wherein in the S2, 1.4 W/cm²≤P1≤1.7 W/cm², 0<T1≤1, 1.5 W/cm²≤P2≤2.2 W/cm², and 2≤T2≤5.

3. The method for preparing the battery cell with the surface containing the insulating coating as claimed in any one of claims 1-2, wherein in the S1, before the spraying, the method further comprises:
pretreating the spraying surface of the battery cell;
after the pretreating of the spraying surface of the battery cell, a surface roughness of the spraying surface satisfies: 0.5 µm≤Ra≤2.5 µm, 3 µm≤Kz≤15 µm, and a dyne level of the spraying surface is≥60.

4. The method for preparing the battery cell with the surface containing the insulating coating as claimed in claim 3, wherein 1.0 µm≤Ka≤2.0 µm, 6 µm≤Kz≤10 µm.

5. The method for preparing the battery cell with the surface containing the insulating coating as claimed in any one of claims 3-4, wherein the pretreating comprises at least one of laser cleaning and plasma treatment.

6. The method for preparing the battery cell with the surface containing the insulating coating as claimed in any one of claims 1-5, wherein in the S1, with an area of the spraying surface defined as S, and a spraying amount of the insulating paint defined as M, the S and the M satisfy: 10 µm≤M/S≤500 µm.

7. The method for preparing the battery cell with the surface containing the insulating coating as claimed in claim 6, wherein the S and the M satisfy: 60 µm≤M/S≤150 µm.

8. The method for preparing the battery cell with the surface containing the insulating coating as claimed in any one of claims 1-7, wherein in the S1, the insulating paint comprises, by weight, 70-98 parts of acrylic resin, 5-20 parts of a first active monomer, 5-20 parts of a second active monomer, 1-10 parts of a first photoinitiator, and 1-10 parts of a second photoinitiator;
the first active monomer is methacrylic acid, and the second active monomer is acrylic acid;
the first photoinitiator is benzotriazole methyl ester photoinitiator, and the second photoinitiator is stilbene photoinitiator.

9. The method for preparing the battery cell with the surface containing the insulating coating as claimed in any one of claims 1-7, wherein in the S1, the insulating paint comprises, by weight, 70-98 parts of acrylic resin, 5-20 parts of a first active monomer, 5-20 parts of a second active monomer, 2-10 parts of a first photoinitiator, and 2-10 parts of a second photoinitiator;
the first active monomer is methacrylic acid, and the second active monomer is acrylic acid;
the first photoinitiator is benzotriazole methyl ester photoinitiator, and the second photoinitiator is stilbene photoinitiator.

10. The method for preparing the battery cell with the surface containing the insulating coating as claimed in any one of claims 8-9, wherein the insulating paint further comprises, by weight, 0.1-30 parts of an auxiliary, and 1-15 parts of a color paste for acrylic resin;
the auxiliary comprises at least one of a dispersant, a defoamer, and a leveling agent.

11. The method for preparing the battery cell with the surface containing the insulating coating as claimed in any one of claims 1-10, wherein in the S1, the spraying is performed by means of a UV spraying process or a UV printing process.

12. The method for preparing the battery cell with the surface containing the insulating coating as claimed in claim 11, wherein the UV spraying process is performed by a spray gun, the UV printing process is performed by 3D printing or a printer.

13. The method for preparing the battery cell with the surface containing the insulating coating as claimed in any one of claims 1-12, wherein a thermal conductivity of the insulating coating is 0.15 W/(m K)-3 W/(m·K).

14. A battery cell with a surface containing an insulating coating, **characterized in that** the battery cell is prepared by the method for preparing the battery cell with the surface containing the insulating coating as claimed in any one of claims 1-13.

15. A battery pack, **characterized by** comprising the battery cell with the surface containing the insulating coating as claimed in claim 14.
